Europäisches Patentamt

European Patent Office

Office européen des brevets

(19)

(11) Veröffentlichungsnummer : **0 188 415**
**B1**

(12) **EUROPÄISCHE PATENTSCHRIFT**

(45) Veröffentlichungstag der Patentschrift :
**02.12.87**

(21) Anmeldenummer : **84902918.6**

(22) Anmeldetag : **17.07.84**

(86) Internationale Anmeldenummer :
**PCT/EP 84/00218**

(87) Internationale Veröffentlichungsnummer :
**WO/8501332 (28.03.85 Gazette 85/08)**

(51) Int. Cl.⁴ : **F 16 D 25/12**, F 16 D 25/10

(54) **ANTRIEBSEINRICHTUNG.**

(30) Priorität : **15.09.83 PCT/EP83/00245**

(43) Veröffentlichungstag der Anmeldung :
**30.07.86 Patentblatt 86/31**

(45) Bekanntmachung des Hinweises auf die Patenterteilung : **02.12.87 Patentblatt 87/49**

(84) Benannte Vertragsstaaten :
**AT FR GB**

(56) Entgegenhaltungen :
**DE-A- 1 575 983**
**DE-A- 2 802 676**
**DE-A- 2 941 935**
**DE-A- 3 115 183**
**DE-A- 3 228 353**
**DE-B- 1 031 063**
**DE-B- 1 217 800**
**DE-B- 1 600 184**
**DE-B- 1 630 950**
**DE-B- 2 316 571**
**FR-A- 2 017 249**
**GB-A-  752 667**
**GB-A- 1 125 172**
**GB-A- 2 001 713**

(73) Patentinhaber : **ZAHNRADFABRIK FRIEDRICHSHA-
FEN AKTIENGESELLSCHAFT**
**Löwentaler Strasse 100 Postfach 2520**
**D-7990 Friedrichshafen 1 (DE)**

(72) Erfinder : **MÜLLER, Franz**
**Torkelstr. 17**
**D-7990 Friedrichshafen 1 (DE)**
Erfinder : **BAUR, Erwin**
**Nikolausweg 10**
**D-7990 Friedrichshafen 1 (DE)**
Erfinder : **SIMON, Herbert**
**Hans-Schnitzler-Str. 60**
**D-7990 Friedrichshafen 1 (DE)**
Erfinder : **SAILER, Hubert**
**Drosselweg 26**
**D-7778 Markdorf (DE)**

(74) Vertreter : **Raue, Reimund**
**Zahnradfabrik Friedrichshafen AG Löwentaler
Strasse 100 Postfach 2520**
**D-7990 Friedrichshafen 1 (DE)**

## Beschreibung

Die Erfindung betrifft eine Antriebseinrichtung mit einer Lamellenkupplung nach dem Oberbegriff des Hauptanspruchs.

Es ist eine derartige Lamellenkupplung bekannt (DE-A-3 228 353).

Eine Lamellenkupplung nach der DE-A-3 228 353 ist klein und einfach gestaltet, weil sie nur für Lastschaltungen zwischen benachbarten Gängen mit geringem Stufensprung benutzt wird und eine zusätzliche Trockenkupplung als Hauptkupplung zwischen Motor und Getriebe vorhanden ist.

Eine solche Trockenkupplung hat, insbesondere bei einem Ackerschlepper, mehrere Nachteile :

Sie vergrößert die Gesamtbaulänge und das Gewicht.

Sie bereitet Probleme wegen der Notwendigkeit, sie gegen Verölen durch Leckverluste aus zwei benachbarten Ölräumen zu schützen.

Sie ist schwer zugänglich in einem Kupplungsgehäuse angeordnet, das einen Teil des Fahrzeugrahmens bildet.

Sie hat Verschleiß derart, daß während der Lebensdauer des Fahrzeuges mehrfach Verschleißteile ausgewechselt werden müssen. Bei einem Ackerschlepper muß dazu jedesmal der Fahrzeugrahmen zwischen Motor und Getriebe aufgetrennt werden.

Der Erfindung liegt die Aufgabe zugrunde, bei einer Einrichtung nach dem Oberbegriff des Hauptanspruchs die Lamellenkupplung so zu verbessern, daß keine Hauptkupplung, insbesondere keine Trockenkupplung, zwischen Motor und Getriebe zusätzlich erforderlich ist.

Diese Aufgabe wird mit den kennzeichnenden Merkmalen des Hauptanspruchs erfüllt. Im Vergleich zu einer üblichen Trockenkupplung als Hauptkupplung hat eine Lamellenkupplung mit den Merkmalen des Hauptanspruchs trotz geringerer Abmessungen und Drehmasse eine wesentlich höhere Lebensdauer, da eine Überhitzung durch lange Rutschzeiten bei schwierigen Anfahrvorgängen durch die Ölkühlung der Reibflächen verhindert wird. Der einzige Nachteil im Vergleich zu einer üblichen Trockenkupplung, das Schleppmoment durch den Ölfilm zwischen den Reibflächen, wird durch die kennzeichnenden Merkmale des Hauptanspruchs vermieden, weil die Reibflächen bei geöffneter Kupplung kein Kühlöl mehr erhalten und daher trockenlaufen.

Eine Lamellenkupplung mit den kennzeichnenden Merkmalen des Hauptanspruchs ist an sich bekannt (DE-A-2 802 676), jedoch nicht in Verbindung mit dem Oberbegriff des Hauptanspruchs.

Anspruch 2 bringt die zusätzlichen Vorteile, daß

die Kupplung schneller öffnet, ein Lastschaltvorgang daher schneller beendet ist,

die dabei schließende andere Kupplung geringer belastet wird,

die Steuerung des Schaltöls einfacher wird, weil die Drehzahl keinen störenden Einfluß mehr hat.

Ein derartiges Entleerventil ist an sich bekannt (DE-A-2 941 935, DE-A-3 115 183), jedoch nicht in Verbindung mit dem Oberbegriff des Hauptanspruchs.

Anspruch 4 bringt die zusätzlichen Vorteile, daß

beim Öffnen der Kupplung zunächst durch eine große Federkraft nur ein kleiner Teil des Schaltöls aus der Kammer der Kupplung über eine lange Leitung und ein Schaltventil zurückgeschoben werden muß, der größere Teil des Schaltöls jedoch auf kurzem Weg schnell entweichen kann,

beim Schließen der Kupplung der Schaltkolben einen großen Teil seines Schaltweges gegen geringe Federkraft schnell zurücklegt, auf dem letzten kleinen Teil des Schaltweges jedoch etwas gebremst wird. Damit wird, trotz kurzer Schaltzeit, der Einschaltstoß zuverlässig gedämpft.

Anspruch 5 bringt die zusätzlichen Vorteile, daß die Federkraft der Rückstellfedern und der Schaltdruck gering sein dürfen, und daß die Steuerung des Schaltöls einfacher bleibt. Anderenfalls müßten die Rückstellfedern stärker und größer sein, entsprechend der am Schaltkolben angreifenden zusätzlichen Druckkraft bei der höchsten zu erwartenden Drehzahl, und die Steuerung des Schaltöls müßte diesen drehzahlabhängigen Druck zusätzlich berücksichtigen.

Ein Ausgleichskolben nach Anspruch 5 ist an sich bekannt (DE-B-1 630 950), jedoch nicht in Verbindung mit dem Oberbegriff des Hauptanspruchs.

Anspruch 6 bringt den zusätzlichen Vorteil, daß die vorgespannte Feder keinen zusätzlichen Bauraum erfordert, sondern einen vorhandenen Einbauraum zusätzlich nutzt.

Anspruch 7 bringt den zusätzlichen Vorteil, daß die Kupplung noch schneller öffnet und bei geöffneter Kupplung an jeder Reibfläche ein ausreichendes Axiallüftspiel zur Verfügung steht.

Außenlamellen nach Anspruch 7 sind an sich bekannt (DE-A-1 575 983), jedoch nicht in Verbindung mit dem Oberbegriff des Hauptanspruchs.

Anspruch 8 bringt den zusätzlichen Vorteil, daß das insgesamt zur Verfügung stehende Axiallüftspiel noch besser auf die einzelnen Abstände zwischen den Innenlamellen verteilt wird und damit jede Außenlamelle axial frei, jedoch ohne zu taumeln, laufen kann.

Ringfedern nach Anspruch 8 sind an sich bekannt (DE-B-2 316 571 Wellringfedern, DE-B-1 600 184 Tellerfedern), jedoch nicht in Verbindung mit dem Oberbegriff des Hauptanspruchs.

Anspruch 9 bringt den zusätzlichen Vorteil, daß eine wesentlich kompaktere Bauweise erreicht wird.

Anspruch 10 bringt den zusätzlichen Vorteil, daß die Steuerung des Schaltdrucks vereinfacht wird, weil jeweils zwei benachbarte Gänge mit dem gleichen Schaltdruck geschaltet werden können.

In der Zeichnung ist eine Doppelkupplung nach der Erfindung dargestellt. Es zeigt :

Fig. 1 einen Längsschnitt
Fig. 2 einen zweiten Längsschnitt
Fig. 3 einen Querschnitt.

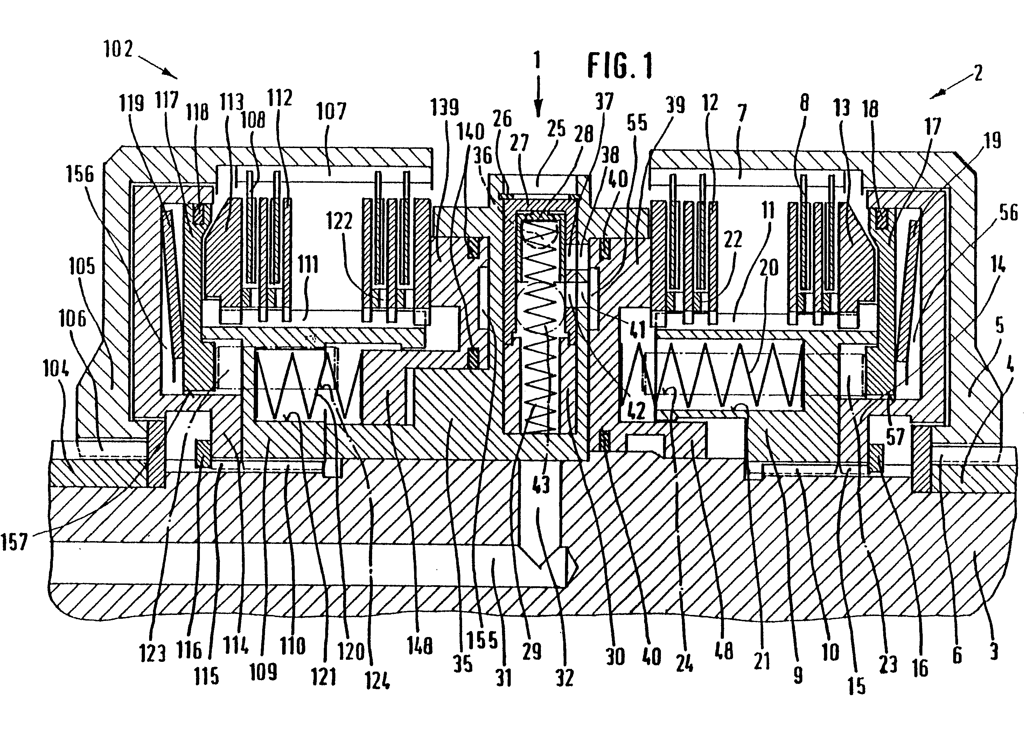

Zwei Kupplungen 2, 102 bilden eine Doppelkupplung 1 mit einer Ausgangswelle 3 und zwei Eingangswellen 4, 104. Außenlamellenträger 5, 105 sind über erste Mitnahmeprofile 6, 106 mit den Eingangswellen 4, 104 verbunden und tragen in zweiten Mitnahmeprofilen 7, 107 Außenlamellen 8, 108. Innenlamellenträger 9, 109 sind über erste Mitnahmeprofile 10, 110 mit der Ausgangswelle 3 verbunden und tragen in zweiten Mitnahmeprofilen 11, 111 Innenlamellen 12, 112 und Endscheiben 13, 113. Ausgleichszylinder 14, 114 sind über Mitnahmeprofile 15, 115 mit der Ausgangswelle 3 verbunden und zusammen mit den Innenlamellenträgern 9, 109 durch Sicherungsringe 16, 116 axial festgelegt. In den Ausgleichszylindern 14, 114 sind Ausgleichskolben 17, 117 mit äußeren Dichtringen 18, 118 angeordnet, dazu noch Tellerfedern 19, 119. In den Innenlamellenträgern 9, 109 sind in ersten Bohrungen 21, 121 Schraubendruckfedern 20, 120 und in zweiten Bohrungen 24, 124 Bolzen 23, 123 angeordnet. Zwischen den Innenlamellenträgern 9, 109 ist auf der Ausgangswelle 3 drehfest und axial festgelegt ein Zylindergehäuse 35 angeordnet und in diesem Zylindergehäuse 35 ein großer Schaltkolben 39 mit äußeren und inneren Dichtringen 40 und ein kleiner Schaltkolben 139 mit äußeren und inneren Dichtringen 140. In Radialbohrungen 25, 125 des Zylindergehäuses 35 sind, gesichert durch Sicherungsringe 26, 126, Schnellentleerventile 27, 28, 29, 30 ; 127, 128, 129, 130 angeordnet mit Ventilgehäusen 27, 127, Kolben 28, 128, Federn 29, 129 und Hülsen 30, 130 (Fig. 1).

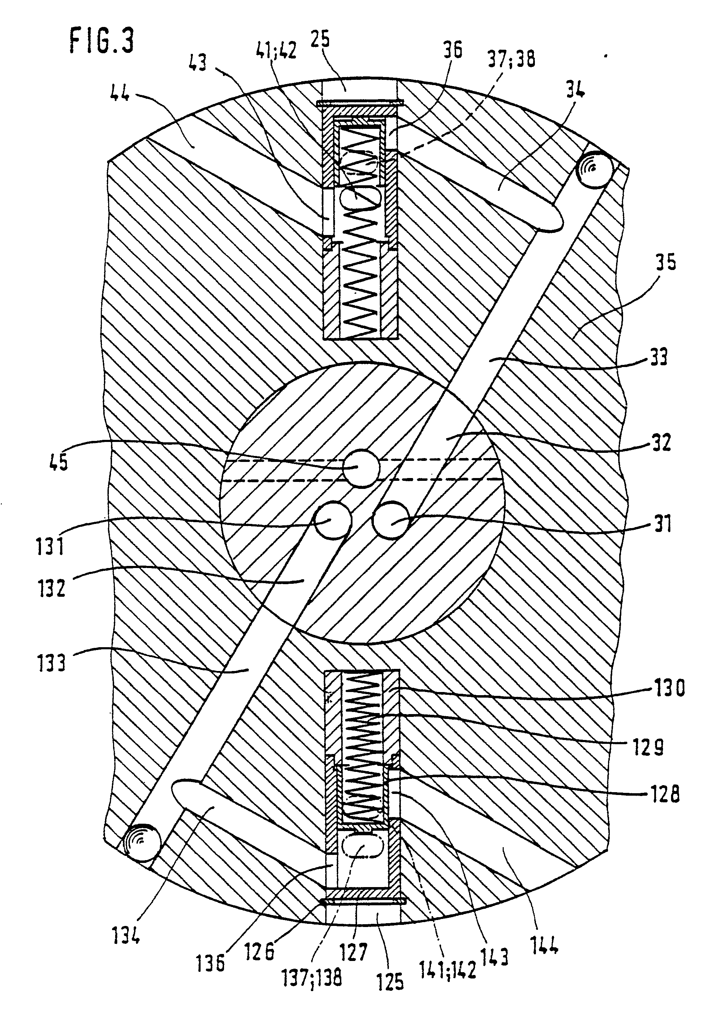

Zum Schließen einer Kupplung 2 oder 102 wird Schaltöl von einem nicht dargestellten Schaltventil über eine Axialbohrung 31 oder 131 und eine Radialbohrung 32 oder 132 in der Ausgangswelle 3, über eine Radialbohrung 33 oder 133 und eine Querbohrung 34 oder 134 im Zylindergehäuse 35, über eine Zulauföffnung 36 oder 136 und eine Füllöffnung 37 oder 137 im Ventilgehäuse 27 oder 127 und eine Füllöffnung 38 oder 138 im Zylindergehäuse 35 zum Schaltkolben 39 oder 139 geleitet (Fig. 3).

Beim Öffnen einer Kupplung fließt nur ein kleiner Teil des Schaltöls über den gleichen langen Weg zurück. Der größere Teil des Schaltöls fließt über eine Auslaßöffnung 41 oder 141 im Zylindergehäuse 35, über eine Auslaßöffnung 42 oder 142 und eine Auslaßbohrung 43 oder 143 im Ventilgehäuse 27 oder 127 und eine Auslaßbohrung 44 oder 144 im Zylindergehäuse 35 auf einem wesentlich kürzeren Weg zurück (Fig. 3).

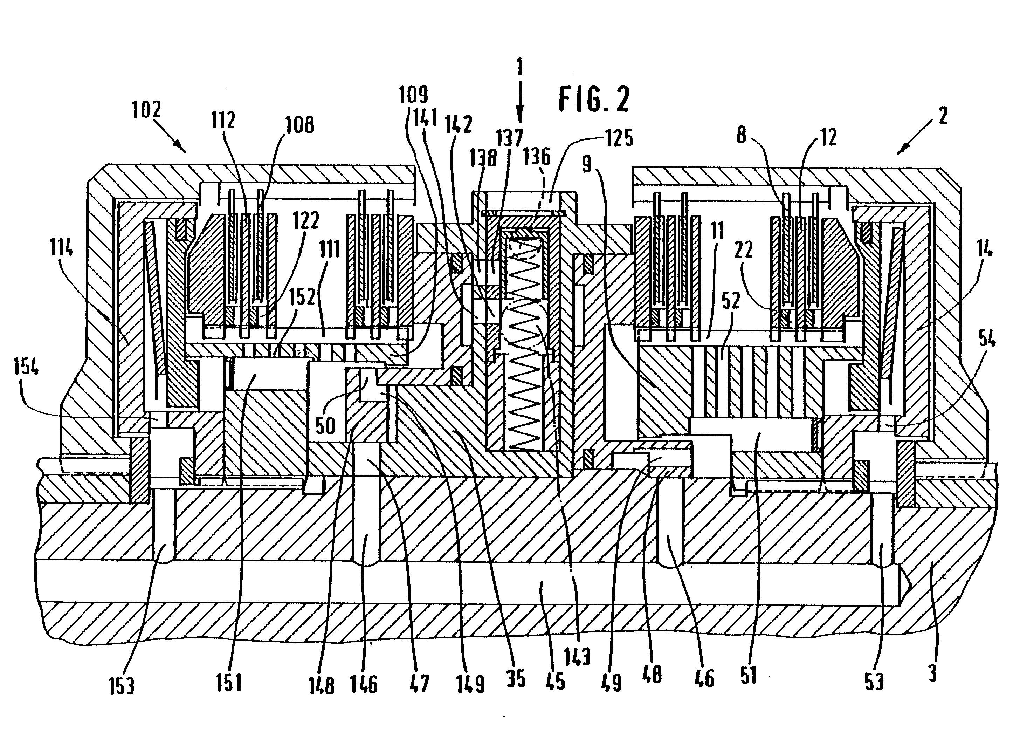

Kühlöl aus einer Axialbohrung 45 in der Ausgangswelle 3 fließt über Radialbohrungen 46, 146 unmittelbar bzw. mittelbar über Radialbohrungen 47 im Zylindergehäuse 35 zu Verlängerungen 48, 148 der Schaltkolben 39, 139 und von dort nur bei teilweise oder vollständig geschlossener Kupplung 2 oder 102 weiter über Axialbohrungen 49 in der Verlängerung 48 oder über Axialbohrungen 149 und Radialbohrungen 50 in der Verlängerung 148, über Axialbohrungen 51 oder 151 und Radialbohrungen 52 oder 152 im Innenlamellenträger 9 oder 109 zu den Innenlamellen 12 oder 112 und Außenlamellen 8 oder 108 (Fig. 2).

Kühlöl aus der Axialbohrung 45 in der Ausgangswelle 3 fließt auch über Radialbohrungen 53, 153 in der Ausgangswelle 3 und über Radialbohrungen 54, 154 in die Ausgleichszylinder 14, 114 (Fig. 2).

Axial zwischen den Innenlamellen 12 oder 112 und der Endscheibe 13 oder 113 und radial zwischen den Außenlamellen 8 oder 108 und dem Mitnahmeprofil 11 oder 111 sind Wellringfedern 22 oder 122 angeordnet (Fig. 1).

Beim Schließen einer Kupplung 2 oder 102 schiebt das Schaltöl zuerst den Kolben 28 oder 128 des Schnellentleerventiles 27, 28, 29, 30 oder 127, 128, 129, 130 gegen die Feder 29 oder 129 bis zur Hülse 30 oder 130 und dann den Schaltkolben 39 oder 139 zuerst gegen die Schraubendruckfedern 20 oder 120 und die Wellringfedern 22 oder 122, dann auch noch gegen die als Wellscheibenfedern gestalteten Außenlamellen 8 oder 108, dann auch noch, mittelbar über die Bolzen 23 oder 123 und den Ausgleichskolben 17 oder 117 gegen die Tellerfeder 19 oder 119, bis alle Lamellen 8, 12 oder 108, 112 zwischen den Schaltkolben 39 oder 139 und der Endscheibe 13 oder 113 spielfrei eingespannt sind und das geforderte Reibmoment erreicht ist (Fig. 1).

Beim Öffnen einer Kupplung 2 oder 102 sind zunächst wieder dieselben Bauteile 19, 8, 22, 20 oder 119, 108, 122, 120 gemeinsam als Rückstellfedern wirksam. Insbesondere die vorgespannte Tellerfeder 19 oder 119 mit ihrer großen Federkraft sorgt dafür daß der Schaltkolben 39 oder 139 schnell ein kleines Stück zurückgeschoben wird und das Reibmoment ein großes Stück kleiner wird. Danach, wenn die Tellerfeder 19 oder 119 unwirksam wird, weil sie sich über den Ausgleichskolben 17 oder 117 gegen den Innenlamellenträger 9 oder 109 abstützt, und wenn dadurch der Druck des Steueröls am Kolben 28 oder 128 so klein wird, daß die Feder 29 oder 129 den Kolben 28 oder 128 zurückschiebt und das Steueröl vom Schaltkolben 39 oder 139 auf kurzem Weg leicht zurückfließen kann, reicht auch die kleine Federkraft der übrigen noch als Rückstellfedern wirksamen Bauteile 8, 22, 20 oder 108, 122, 120 aus, um den Schaltkolben 39 oder 139 schnell vollständig zurückzuschieben und allen Außenlamellen 8 oder 108 soviel Axialspiel zu geben, daß sie frei, aber ohne zu taumeln, laufen können. Dabei sperrt die Verlängerung 48 oder 148 des Schaltkolbens 39 oder 139 das Kühlöl zu den Lamellen 8, 12 oder 108, 112 ab, und die kleine ölgekühlte Kupplung 2 oder 102 läuft als trockene Kupplung mit einem sehr geringen Verlustmoment (Fig. 2).


Bezugzeichen

1                    Doppelkupplung

| | |
|---|---|
| 2, 102 | Lamellenkupplung, Kupplung |
| 3 | Ausgangswelle, Anschlußglied |
| 4, 104 | Eingangswelle, Anschlußglied |
| 5, 105 | Außenlamellenträger |
| 6, 106 | Mitnahmeprofil |
| 7, 107 | Mitnahmepofil |
| 8, 108 | Außenlamellen |
| 9, 109 | Innenlamellenträger |
| 10, 110 | Mitnahmeprofil |
| 11, 111 | Mitnahmeprofil |
| 12, 112 | Innenlamellen |
| 13, 113 | Endscheibe |
| 14, 114 | Ausgleichszylinder |
| 15, 115 | Mitnahmeprofil |
| 16, 116 | Sicherungsring |
| 17, 117 | Ausgleichskolben |
| 18, 118 | Dichtring |
| 19, 119 | Tellerfeder |
| 20, 120 | Schraubendruckfeder |
| 21, 121 | Bohrung |
| 22, 122 | Wellringfeder, Ringdeder |
| 23, 123 | Bolzen |
| 24, 124 | Bohrung |
| 25, 125 | Radialbohrung |
| 26, 126 | Sicherungsring |
| 27, 127 | Ventilgehäuse |
| 28, 128 | Kolben |
| 29, 129 | Feder |
| 30, 130 | Hülse |
| 31, 131 | Axialbohrung |
| 32, 132 | Radialbohrung |
| 33, 133 | Radialbohrung |
| 34, 134 | Querbohrung |
| 35 | Zylindergehäuse |
| 36, 136 | Zulauföffnung |
| 37, 137 | Füllöffnung |
| 38, 138 | Fullöffnung |
| 39, 139 | Schaltkolben |
| 40, 140 | Dichtring |
| 41, 141 | Auslaßöffnung |
| 42, 142 | Auslaßöffnung |
| 43, 143 | Auslaßbohrung |
| 44, 144 | Auslaßbohrung |
| 45 | Axialbohrung |
| 46, 146 | Radialbohrung |
| 47 | Radialbohrung |
| 48, 148 | Verlängerung |
| 49, 149 | Axialbohrung |
| 50 | Radialbohrung |
| 51, 151 | Axialbohrung |
| 52, 152 | Radialbohrung |
| 53, 153 | Radialbohrung |
| 54, 154 | Radialbohrung |
| 55, 155 | Kammer |
| 56, 156 | Kammer |
| 57, 157 | Rand |

**Patentansprüche**

1. Einrichtung zum Antrieb von Kraftfahrzeugen, insbesondere von Ackerschleppern, mit einem nach dem Doppelkupplungsprinzip lastschaltbaren Zahnradgetriebe mit parallelen Leistungszweigen mit je einer hydraulisch betätigten Lamellenkupplung (2, 102) mit ölgekühlten Reibflächen, mit einem Außenlamellenträger (5, 105) mit Außenlamellen (8, 108) und einem ersten Anschlußglied zur Drehmomentübertragung, mit einem Innenlamellenträger (9, 109) mit Innenlamellen (11, 112) und einem zweiten Anschlußglied zur Drehmomentübertragung, mit einem Betätigungszylinder (35, 39 ; 35, 139) mit einem Schaltkolben (39, 139) in einem Zylindergehäuse (35) und mit Rückstellfedern (20, 120) und mit einer Mehrzahl von der kraftschlüssigen Lamellenkupplung in Leistungsflußrichtung vor- oder nachgeordneten oder vor- und nachgeordneten formschlüssigen Schaltkupplungen, dadurch gekennzeichnet, daß

auch zum Anfahren jeweils nur eine dieser Lamellenkupplungen (2 oder 102) benutzt wird,

bei geöffneter Lamellenkupplung (2 oder 102) der Schaltkolben (39 oder 139) einen Kühlölstrom zu den Lamellen (8, 12 oder 108, 112) sperrt,

beim Schließen der Lamellenkupplung (2 oder 102) der Schaltkolben (39 oder 139) nach einem geringen Teil eines insgesamt großen Schaltweges einen Kühlölstrom zu den Lamellen (8, 12 oder 108, 112) freigibt,

bei geschlossener Lamellenkupplung (2 oder 102) durch Radialnuten in den Lamellen (8, 12 oder 108, 112) ein großer Kühlölstrom fließt.

2. Einrichtung nach Anspruch 1, dadurch gekennzeichnet, daß

mindestens ein Entleerventil (27, 28, 29, 30 oder 127, 128, 129, 130) im Zylindergehäuse (35) in einer ersten Stellung eine Kammer (55 oder 155) des Betätigungszylinders (35, 39 oder 35, 139) über eine kurze Auslaßbohrung (44 oder 144) mit einem Behälter verbindet derart, daß in der Kammer (55 oder 155) nur noch eine geringe Restölmenge verbleibt,

das Entleerventil (27, 28, 29, 30 oder 127, 128, 129, 130) in einer zweiten Stellung die Kammer (55 oder 155) über eine Reihe von Bohrungen (34, 33, 32, 31 oder 134, 133, 132, 131), die zusammen eine lange Leitung bilden, mit einem Schaltventil verbindet,

ein Kolben (28 oder 128) des Entleerventils (27, 28, 29, 30 oder 127, 128, 129, 130) durch eine Feder (29 oder 129) nach radial außen, in Fliehkraftrichtung, in die erste Stellung geschoben wird,

der Kolben (28 oder 128) und die Feder (29 oder 129) so bemessen sind, daß die axial am Kolben (28 oder 128) angreifenden drehzahlabhängigen Kräfte im wesentlichen einander aufheben.

3. Einrichtung nach Anspruch 2, dadurch gekennzeichnet, daß

der Kolben (28 oder 128) in einem Ventilgehäuse (27 oder 127) läuft, das in einer Radialbohrung (25 oder 125) des Zylindergehäuses (35) befestigt ist,

für die Abdichtung zwischen dem Kolben (28 oder 128) und dem Ventilgehäuse (27 oder 127) und zwischen dem Ventilgehäuse (27 oder 127) und dem Zylindergehäuse (35) kein zusätzlicher Dichtring vorhanden ist.

4. Einrichtung nach einem der vorangehenden Ansprüche, dadurch gekennzeichnet, daß

die Rückstellfedern mindestens aus einer Feder (20 oder 120) mit geringer Federkraft und einer vorgespannten Feder (19 oder 119) mit großer Federkraft bestehen,

die vorgespannte Feder (19 oder 119) nur in einem geringen Teil des Schaltweges des Schaltkolbens (39 oder 139), zu Anfang beim Öffnen und gegen Ende beim Schließen der Kupplung (2 oder 102), wirksam ist.

5. Einrichtung nach einem der vorangehenden Ansprüche, dadurch gekennzeichnet, daß die drehzahlabhängigen hydraulischen Axialkräfte am Schaltkolben (39 oder 139), vorzugsweise bei geschlossener Kupplung (2 oder 102), ausgeglichen werden durch die drehzahlabhängigen hydraulischen Axialkräfte an einem Ausgleichskolben (17 oder 117) in einem radial innen offenen Ausgleichszylinder (14 oder 114) mit einer Kammer (56 oder 156), die bis zum Überlauf über einen inneren Rand (57 oder 157) des Ausgleichskolbens (17 oder 117) über Bohrungen (45, 53, 54 oder 45, 153, 154) mit Kühlöl gefüllt wird.

6. Einrichtung nach Anspruch 5, dadurch gekennzeichnet, daß

der Innenlamellenträger (9 oder 109) axial zwischen dem Zylindergehäuse (35) und dem Ausgleichszylinder (14 oder 114) angeordnet und mit diesen beiden Bauteilen (35, 14 oder 35, 114) drehfest verbunden ist,

die vorgespannte Feder (19 oder 119) in der Kammer (56 oder 156) zwischen dem Ausgleichszylinder (14 oder 114) und dem Ausgleichskolben (17 oder 117) angeordnet ist und den Ausgleichskolben (17 oder 117) axial an den Innenlamellenträger (9 oder 109) anlegt,

axiale Bolzen (23 oder 123), geführt in Bohrungen (24 oder 124) des Innenlamellenträgers (9 oder 109), Axialkraft übertragen zwischen dem Schaltkolben (39 oder 139) und dem Ausgleichskolben (17 oder 117),

die axialen Bolzen (23 oder 123) so lang sind, daß sie nur in einem geringen Teil des Schaltweges des Schaltkolbens (39 oder 139), zu Anfang beim Öffnen und gegen Ende beim Schließen der Kupplung (2 oder 102), Axialkraft übertragen.

7. Einrichtung nach einem der vorangehenden Ansprüche, dadurch gekennzeichnet, daß

die Außenlamellen (8 oder 108) als Wellscheibenfedern ausgebildet sind,

die ungespannte Höhe dieser Wellscheibenfedern bzw. Außenlamellen (8 oder 108) mindestens 0,1 mm, höchstens 0,8 mm, vorzugsweise 0,2 bis 0,5 mm, geringer ist als der mittlere Abstand der Innenlamellen (12 oder 112) bei geöffneter Kupplung (2 oder 102).

8. Einrichtung nach Anspruch 7, dadurch gekennzeichnet, daß

axial zwischen den Innenlamellen (12 oder 112), radial innerhalb der Außenlamellen (8 oder 108) und geführt auf dem Innenlamellenträger (9 oder 109) Ringfedern (22 oder 122) angeordnet sind,

die ungespannte Höhe der Ringfedern (22 oder 122) größer ist als der mittlere Abstand der Innenlamellen (12 oder 112) bei geöffneter Kupplung (2 oder 102),

die Blockhöhe der Ringfedern (22 oder 122) kleiner ist als die Blockhöhe der Wellscheibenfedern bzw. Außenlamellen (8 oder 108),

die größte Federkraft der Ringfedern (22 oder 122) wesentlich, vorzugsweise um einen Faktor zwischen 5 und 20, kleiner ist als die größte Schaltkraft, definiert als Produkt aus der Kolbenfläche des Schaltkolbens (39 oder 139) und dem größten Schaltdruck, gemessen am Schaltventil.

9. Einrichtung nach einem der vorangehenden Ansprüche, dadurch gekennzeichnet, daß

zwei Kupplungen (2 und 102) gleicher Art baulich vereinigt sind zu einer Doppelkupplung (1) mit einem gemeinsamen Zylindergehäuse (35) und einem gemeinsamen Anschlußglied (3) zur Drehmomentübertragung derart, daß die Doppelkupplung (1) insgesamt nur drei Anschlußglieder (3, 4, 104) hat,

eins der beiden anderen Anschlußglieder (4 oder 104) eine Hohlwelle ist.

10. Einrichtung nach Anspruch 9, dadurch gekennzeichnet, daß

beide Kupplungen (2 und 102) der Doppelkupplung (1) eine gleiche Anzahl gleicher Außenlamellen (8 und 108) und Innenlamellen (12 und 112) aufweisen,

die beiden Schaltkolben (39 und 139) der Doppelkupplung (1) verschiedene Kolbenflächen haben derart, daß die verschieden großen höchsten geforderten Rutschmomente mit dem gleichen Schaltdruck am Schaltventil erreicht werden.

**Claims**

1. Device for driving motor vehicles especially agricultural tractors by means of a power-shiftable gearbox designed on the dual clutch principle, having parallel power branches, each equipped with an hydraulically actuated multi-disc clutch (2, 102) with oil cooled friction surfaces, an outer disc carrier (5, 105) with outer discs (8, 108) and a first connection member for torque transfer, with an inner disc carrier (9, 109) with inner discs (11, 112) and a second connection member for torque transfer, with an actuating cylinder (35, 39 ; 35, 139) containing a shift piston (39, 139) in a cylinder housing (35), with return springs (20, 120), and with a number of positive claw clutches mounted on either side of the nonpositive multi-disc cluth in the direction of power transmission, characterized in that

when setting off, only one of these multi-disc clutches (2 or 102) is used,

when the multi-disc clutch (2 or 102) is disengaged, the shift piston (39 or 139) blocks the flow of coolant to the discs (8, 12 or 108, 112)

when the multi-disc clutch (2 or 102) is being engaged, the shift piston (39 or 139) releases a flow of coolant to the discs (8, 12 or 108, 112) after only a small part of a long selector stroke has been travelled

when the multi-disc clutch (2 or 102) is engaged, plenty of coolant is able to flow through the discs (8, 12 or 108, 112) via radial grooves in the discs.

2. Device according to claim 1, characterized in that

at least one drain valve (27, 28, 29, 30 or 127, 128, 129, 130) in the cylinder housing (35) connects, in a first position, a chamber (55 or 155) of the actuating cylinder (35, 39 or 35, 139) to a container via a short drain bore (44 or 144) in such a way that only a small amount of residual oil is left in the chamber (55 or 155)

in a second position, the drain valve (27, 28, 29, 30 or 127, 128, 129, 130) connects the chamber (55 or 155) to a shift valve via a series of bores (34, 33, 32, 31 or 134, 133, 132, 131) which together form a long connecting duct

a piston (28 or 128) of the drain valve (27, 28, 29, 30 or 127, 128, 129, 130) is pushed radially outwards in the direction of centrifugal force into the first position by a spring (29 or 129)

the piston (28 or 128) and the spring (29 or 129) are proportioned in such a way that speed-dependent axial forces arising on the piston (28 or 128) virtually cancel each other out.

3. Device according to claim 2, characterized in that

the piston (28 or 128) runs in a valve housing (27 or 127) which is secured in a radial bore (25 or 125) of the cylinder housing (35),

no additional sealing ring is provided for the seal between piston (28 or 128) and the valve housing (27 or 127) and between the valve housing (27 or 127) and the cylinder housing (35).

4. Device according to one of the preceding claims, characterized in that

the return springs comprise at least one spring (20 or 120) with slight spring tension and one pre-loaded spring (19 or 119) with high spring tension,

the pre-loaded spring (19 or 119) is only effective along a short part of the shift piston (39 or 139) stroke coinciding with the initial disengaging and final engaging stages of clutch (2 or 102) operation.

5. Device according to one of the preceding claims, characterized in that the speed-dependent hydraulic axial forces on the shift piston (39 or 139), preferably when clutch (2 or 102) is engaged, are compensated by the speed-dependent hydraulic axial forces on the compensating piston (17 or 117) in a compensating cylinder (14 or 114) which forms a chamber (56 or 156) which is filled with coolant oil through bores (45, 53, 54 or 45, 153, 154) until it overflows over an inner brim (57 or 157) of the compensating piston (17 or 117).

6. A device according to claim 5, characterized in that

the inner disc carrier (9 or 109) is axially located between the cylinder housing (35) and the compensating cylinder (14 or 114) and is rotatively fixedly connected to these two components (35, 14 or 35, 114)

the pre-loaded spring (19 or 119) is located in the chamber (56 or 156) between the compensating cylinder (14 or 114) and the compensating piston (17 or 117) and positions the compensating piston (17 or 117) axially against the inner disc carrier (9 or 109).

axial bolts (23 or 123) placed in bores (24 or 124) of the inner disc carrier (9 or 109) transfer axial force between the shift piston (39 or 139) and the compensating piston (17 or 117),

the axial bolts (23 or 123) are of such a length that they only transfer axial force on a short part of the selector stroke of the shift piston (39 or 139) at the beginning of the disengaging and end of the engaging stages of clutch (2 or 102) actuation.

7. Device according to one of the preceding claims, characterized in that

the outer discs (8 or 108) take the form of corrugated Belleville springs,

the unloaded height of these corrugated Belleville springs or outer discs (8 or 108) respectively should be min 0.1 mm, max 0.8 mm and preferably between 0.2 and 0.5 mm less than the average distance between the inner discs (12 or 112) when clutch (2 or 102) is disengaged.

8. Device according to claim 7, characterized in that ring springs (22 or 122) are located axially between the inner discs (12 or 112), radially inside the outer discs (8 or 108) and guided on the inner disc carrier (9 or 109)

the unloaded height of these ring springs (22 or 122) is greater than the average distance between the inner discs (12 or 122) when clutch (2 or 102) is disengaged

the material of ring springs (22 or 122) is less thick than that of corrugated Belleville springs or outer discs (8 or 108) respectively,

the maximum spring tension of these ring springs (22 or 122) is a great deal less than maximum shift force, preferably having a factor between 5 and 20, whereby this force is defined as the product of the piston surface of the shift piston (39 or 139) and the maximum shift pressure measured at shift valve.

9. Device according to one of the preceding claims, characterized in that

two clutches (2 and 102) of the same type are fitted together to form a dual clutch (1) sharing the same cylinder housing (35) and a common connection member (3) for transfert of torque in such a way that the dual clutch (1) has a total of only three connection members (3, 4, 104)

one of the other two connection members (4 or 104) is a quill shaft.

10. Device according to claim 9, characterized in that

both clutches (2 and 102) of the dual clutch (1) are fitted with the same number of the same outer discs (8 and 108) and inner discs (12 and 112)

both shift pistons (39 and 139) of the dual clutch (1) have different piston surfaces such that the differing maximum levels of slip torque required can be achieved with identical shift pressure in shift valve.

## Revendications

1. Dispositif d'entraînement de véhicules automobiles, notamment de tracteurs agricoles, comprenant une boîte de vitesses à engrenages qui est commutable en charge suivant le principe de l'embrayage double, avec des voies d'entraînement parallèles comprenant chacune un embrayage à disques multiples (2, 102) actionné hydrauliquement et comportant des surfaces de friction refroidies à l'huile, un porte-disques extérieur (5, 105) équipé de disques extérieurs (8, 108) et d'un premier élément de raccordement pour la transmission du couple, un porte-disques intérieur (9, 109) équipé de disques intérieurs (12, 112) et d'un second élément de raccordement pour la transmission du couple, un cylindre d'actionnement (35, 39 : 35, 139) ayant un piston de commande (39, 139) dans un corps de cylindre (35) et des ressorts de rappel (20, 120), plusieurs embrayages à engagement positif étant disposés en amont et/ou en aval de l'embrayage à disques à adhérence, par rapport au sens de transmission de la puissance, caractérisé en ce que :

même pour le démarrage, seul l'un de ces embrayages à disques (2 ou 102) est utilisé,

en position ouverte d'un embrayage à disques (2 ou 102), le piston de commande (39 ou 139) bloque un courant d'huile de refroidissement dirigé vers les disques (8, 12 ou 108, 112),

au cours de la fermeture de l'embrayage à disques (2 ou 102), le piston de commande (39 ou 139) libère, après une petite partie d'une course totale relativement longue, un courant d'huile de refroidissement dirigé vers les disques (8, 12 ou 108, 112),

en position fermée de l'embrayage à disques (2 ou 102), un fort courant d'huile de refroidissement s'écoule à travers des rainures axiales ménagées dans les disques (8, 12 ou 108, 112).

2. Dispositif selon la revendication 1, caractérisé en ce que :

au moins une soupape de vidange (27, 28, 29, 30 ou 127, 128, 129, 130) disposée dans le corps de cylindre (35) relie, dans une première position, une chambre (55 ou 155) du cylindre d'actionnement (35, 39 ou 35, 139) à un réservoir par un court alésage de sortie (44 ou 144) de manière qu'il ne reste dans la chambre (55 ou 155) qu'une petite quantité d'huile,

dans une seconde position, la soupape de vidange (27, 28, 29, 30 ou 127, 128, 129, 130) relie ladite chambre (55 ou 155) à une soupape de commutation par une série d'alésages (34, 33, 32, 31 ou 134, 133, 132, 131) qui forment ensemble un long conduit,

un piston (28 ou 128) de la soupape de vidange (27, 28, 29, 30 ou 127, 128, 129, 130) est sollicité radialement vers l'extérieur, en direction centrifuge, vers ladite première position au moyen d'un ressort (29 ou 129),

le piston (28 ou 128) et le ressort (29 ou 129) sont dimensionnés de manière que les forces dépendant du régime de rotation et agissant axialement sur le piston (28 ou 128) se compensent mutuellement.

3. Dispositif selon la revendication 2, caractérisé en ce que :

le piston (28 ou 128) coulisse dans un corps de soupape (27 ou 127) qui est fixé dans un alésage radial (25 ou 125) du corps de cylindre (35),

aucune bague d'étanchéité supplémentaire n'est prévue pour l'étanchéité entre le piston (28 ou 128) et le corps de soupape (27 ou 127), ainsi qu'entre le corps de soupape (27 ou 127) et le corps de cylindre (35).

4. Dispositif selon l'une des revendications précédentes, caractérisé en ce que :

lesdits ressorts de rappel comprennent au moins un ressort (20 ou 120) à petite force de rappel et un ressort précontraint (19 ou 119) à grande force de rappel,

le ressort précontraint (19 ou 119) n'agit que sur une petite partie de la course efficace du piston de commande (39 ou 139), au début de l'ouverture et à la fin de la fermeture de l'embrayage (2 ou 102).

5. Dispositif selon l'une des revendications précédentes, caractérisé en ce que les forces hydrauliques axiales dépendant du régime de rotation et agissant sur le piston de commande (39 ou 139) sont équilibrées, de préférence quand l'embrayage (2 ou 102) est fermé, par les forces hydrauliques axiales dépendant du régime de rotation et agissant sur un piston compensateur (17 ou 117) dans un cylindre de compensation (14 ou 114) ouvert radialement vers l'intérieur, comportant une chambre (56 ou 156) qui est remplie d'huile de refroidissement par des alésages (45, 53, 54 ou 45, 153, 154) jusqu'au débordement par-dessus un bord intérieur (57 ou 157) du piston compensateur (17 ou 117).

6. Dispositif selon la revendication 5, caractérisé en ce que :

le porte-disques intérieur (9 ou 109) se trouve axialement entre le corps de cylindre (35) et le cylindre de compensation (14 ou 114) et est solidaire en rotation de ces deux éléments (35, 14 ou 35, 114),

le ressort précontraint (19 ou 119) est disposé dans la chambre (56 ou 156) entre le cylindre de compensation (14 ou 114) et le piston compensateur (17 ou 117) et applique axialement le piston compensateur (17 ou 117) contre le porte-disques intérieur (9 ou 109),

des tiges axiales (23 ou 123), guidées dans des alésages (24 ou 124) du porte-disques intérieur (9 ou 109), transmettent la force axiale entre le piston de commande (39 ou 139) et le piston compensateur (17 ou 117),

ces tiges axiales (23 ou 123) ont une longueur telle qu'elles ne transmettent la force axiale que sur une petite partie de la course efficace du piston de commande (39 ou 139), au début de l'ouverture et à la fin de la fermeture de l'embrayage (2 ou 102).

7. Dispositif selon l'une des revendications précédentes, caractérisé en ce que :

les disques extérieurs (8 ou 108) sont formés par des disques élastiques ondulés,

l'épaisseur au repos de ces disques élastiques ondulés ou disques extérieurs (8 ou 108) est inférieure d'au moins 0,1 mm et d'au plus 0,8 mm, de préférence de 0,2 à 0,5 mm, à l'écartement moyen des disques intérieurs (12 ou 112) quand l'embrayage est ouvert (2 ou 102).

8. Dispositif selon la revendication 7, caractérisé en ce que :

des bagues-ressorts (22 ou 102) sont disposées axialement entre les disques intérieurs (12 ou 112), radialement en dedans des disques extérieurs (8 ou 108) et sont montées sur le porte-disques intérieur (9 ou 109),

l'épaisseur au repos de ces bagues-ressorts (22 ou 122) est plus grande que l'écartement moyen des disques intérieurs (12 ou 112) quand l'embrayage (2 ou 102) est ouvert,

l'épaisseur de matière des bagues-ressorts (22 ou 122) est plus petite que l'épaisseur de matière des disques élastiques ondulés ou disques extérieurs (8 ou 108),

la force élastique maximale des bagues-ressorts (22 ou 122) est sensiblement inférieure, de préférence d'un facteur compris entre 5 et 20, à la force maximale de commande, définie comme le produit de la surface efficace du piston de commande (39 ou 139) par la pression de commande maximale mesurée à la soupape de commande.

9. Dispositif selon l'une des revendications précédentes, caractérisé en ce que :

deux embrayages (2 et 102) construits de la même manière sont réunis en un embrayage double (1) ayant un corps de cylindre commun (35) et un élément de raccordement commun (3) pour la transmission du couple, de telle manière que l'embrayage double (1) ne comporte au total que trois éléments de raccordement (3, 4, 104), l'un des deux autres éléments de raccordement (4 ou 104) est un arbre creux.

10. Dispositif selon la revendication 9, caractérisé en ce que :

les deux embrayages (2 et 102) de l'embrayage double (1) comportent chacun un même nombre de disques extérieurs identiques (8 et 108) et de disques intérieurs identiques (12 et 112),

les deux pistons de commandes (39 et 139) de l'embrayage double (1) ont des sections respectives différentes, de sorte que les moments de friction maximaux différents qui sont requis sont obtenus avec la même pression de commande à la soupape de commande.

FIG. 1

0 188 415

FIG.2

0 188 415

FIG.3

0 188 415